# EUROPÄISCHE PATENTSCHRIFT

(11) **EP 4 397 575 B1**
(45) Veröffentlichungstag und Bekanntmachung des Hinweises auf die Patenterteilung: **19.03.2025**
(21) Anmeldenummer: 23218900.1
(22) Anmeldetag: 20.12.2023
(51) Int. Cl.: B62D 21/20, B62D 53/06, B62D 21/14

(54) **NUTZFAHRZEUG MIT BEWEGLICHEM HECKAUSSCHUB**
UTILITY VEHICLE WITH MOVABLE REAR EJECTION
VÉHICULE UTILITAIRE À POUSSÉE ARRIÈRE MOBILE

(30) Priorität: 09.01.2023 DE 102023100305
(43) Veröffentlichungstag der Anmeldung: 10.07.2024
(73) Patentinhaber: Fahrzeugwerk Bernard Krone GmbH & Co. KG, 49757 Werlte (DE)
(72) Erfinder: Korte, Hendrik, 49757 Werlte (DE); Andreas, Broeker, 49757 Werlte (DE); Perk, Thorsten, 26901 Lorup (DE)
(74) Vertreter: Weeg, Thomas

(56) Entgegenhaltungen:
- EP-A1- 3 712 045
- DE-A1- 10 145 432
- DE-C2- 10 201 497
- DE-U1- 20 311 297
- US-A- 4 580 805

## Beschreibung

Die vorliegende Erfindung bezieht sich auf ein Nutzfahrzeug mit einem beweglichen Heckausschub nach dem Oberbegriff des Anspruchs 1.

Aus dem Stand der Technik sind Nutzfahrzeuge bekannt, die über einen Heckausschub verfügen, um das Nutzfahrzeug längenmäßig an eine Ladung anpassen zu können. Beispielhaft können hier als Container-Chassis ausgebildete Trailer genannt werden. Mit dem Box Liner SDC 27 eLTU5-2 - ein Container-Chassis der Anmelderin - lassen sich beispielsweise Container in den Größen 1 x 40', 1 x 45', 2 x 20', 1 x 20' mittig (bis 30 to.) sowie optional 1 x 30' Container heckbündig transportieren. Ein entsprechendes Container-Chassis ist in der Schrift DE 10 2008 021 795 A1 offenbart. Um das Container-Chassis an verschiedene Containergrößen anpassen zu können, verfügt es über einen Heckausschub. Um den Heckausschub ein- und auszufahren, sind mechanische und pneumatische Antriebe bekannt.

Die mechanischen Antriebe sind häufig als Zahnstangengetriebe ausgebildet. Die Zahnstange des Zahnstangengetriebes ist fest mit dem Heckausschub verbunden und das Zahnrad des Zahnstangengetriebes ist auf einer rahmenfest gelagerten antreibbaren Welle gehalten. Die antreibbare Welle erstreckt sich in einer Richtung quer zur Längsmittelachse des Nutzfahrzeuggestells und quer zur Auszugsrichtung, in die der Heckausschub ausgezogen werden kann. An dem dem Zahnrad abgewandten Ende der antreibbaren Welle ist eine Handkurbel angebracht, mit der das Zahnrad in eine gewünschte Richtung gedreht werden kann. Die rotierende Bewegung des Zahnrads wird über die Zahnstange in eine lineare Bewegung des Heckausschubs übertragen. Das Dokument US 4 580 805 A offenbart ein Nutzfahrzeug mit einem am Rahmen des Nutzfahrzeugs gehaltenen Heckausschub nach der Präamble des vorliegenden Anspruchs 1.

Weitere Nutzfahrzeuge mit Heckausschub sind in den Druckschriften DE 101 45 432 A1, EP 1 500 579 B1 und DE 10 2016 007 667 B3 offenbart. Fahrzeugchassis mit längsverstellbaren Rahmen sind in den Druckschriften US 3 254 903 A, EP 0 825 097 A1 und DE 103 27 075 A1 offenbart. Die in diesen Druckschriften offenbarten Verstellvorrichtungen werden teilweise hydraulisch oder pneumatisch betätigt, was einen erheblichen Bauaufwand verursacht. Teilweise wird die Verstelltechnik nicht näher beschrieben, nur die Druckschrift US 3 254 903 A offenbart einen Zahnstangenantrieb, mit dem allerdings kein Heckausschub betätigbar ist.

Bei den Zahnstangengetrieben besteht das Problem, dass es bei Be- oder Entladevorgängen und den damit einhergehenden Stößen auf den Heckausschub in einer vertikalen Richtung, die auch auf die Antriebskomponenten wirken, zu Beschädigungen oder zu einem Komplettausfall des Zahnstangengetriebes kommen kann. In solchen Fällen brechen oder verbiegen sich die Zähne des Zahnrads und/oder der Zahnstange. Je nach Ausprägung der Beschädigung ist die Funktionalität des Heckausschubs eingeschränkt oder ganz blockiert.

Es ist die Aufgabe der vorliegenden Erfindung, den Antrieb so auszugestalten, dass das Risiko von Beschädigungen bei Be- und Entladevorgängen verringert ist.

Die Aufgabe wird durch die Merkmale des Anspruchs 1 gelöst.

Mit der Verstellvorrichtung ist das Zahnrad zwischen einer ersten Stellung, in der die Zähne des Zahnrads in Eingriff mit Zähnen der Zahnstange stehen, und einer zweiten Stellung, in der die Zähne des Zahnrads nicht in Eingriff stehen mit den Zähnen der Zahnstange, hin und her beweglich. Wenn sich das Zahnrad in der ersten Stellung befindet, kann es mit einer Rotationsbewegung die Zahnstange und damit den Heckausschub in eine gewünschte Richtung bewegen. Wenn sich das Zahnrad in der zweiten Stellung befindet, ist es zwar nicht mehr benutzbar, um den Heckausschub zu bewegen, die Zähne des Zahnrads und/oder der Zahnstange können aber auch nicht mehr durch einwirkende Kraftstöße beim Beladen oder Entladen des Nutzfahrzeugs beschädigt werden, weil die Zähne der Zahnstange und des Zahnrads dabei nicht mehr aufeinanderschlagen. Beschädigungen an dem Antrieb werden vermieden, wenn sich das Zahnrad des Zahnstangengetriebes nur dann in der ersten Stellung befindet, wenn der Heckausschub bewegt werden soll, und sich die übrige Zeit in der zweiten Stellung befindet. Da Be- und Endladeladevorgänge des Nutzfahrzeugs nicht stattfinden, wenn der Heckausschub bewegt wird, ist eine Beschädigung des Zahnstangengetriebes auf diese Weise ausgeschlossen. Die antreibbare Welle, auf der das Zahnrad gehalten ist, kann mit einem mechanischen oder motorischen Antrieb angetrieben werden. Die antreibbare Welle kann sich insbesondere in einer Richtung quer zur Längsmittelachse des Nutzfahrzeuggestells und quer zur Auszugsrichtung, in die der Heckausschub ausgezogen werden kann, erstrecken. Als mechanischer Antrieb kommt beispielsweise eine Handkurbel, als motorischer Antrieb ein pneumatischer, hydraulischer oder elektrischer Motor in Betracht.

Die Verstellvorrichtung kann über eine Stange oder einen Hebel oder ebenfalls motorisch betätigbar sein. Sie kann auch verriegelbar ausgestaltet sein, um eine ungewollte selbsttätige Verstellung zu vermeiden.

Wenn vorstehend von einem Zahnstangengetriebe die Rede ist, so ist das nicht als eine zahlenmäßige Beschränkung auf ein einziges Zahnstangengetriebe zu verstehen. In einem Nutzfahrzeug können beispielsweise auch zwei Zahnstangengetriebe vorgesehen sein, über die der Heckausschub beweglich ist.

Nach einer Ausgestaltung der Erfindung ist die Verstellvorrichtung als ein Verstellmittel ausgebildet, mit dem die mit dem Rahmen verbundene antreibbare Welle mit dem damit verbundenen Zahnrad in einer axialen Richtung zwischen den ersten und zweiten Stellungen beweglich ist. Das Zahnrad ist bevorzugt ortsfest auf der antreibbaren Welle befestigt. Mit dem Verstellmittel kann die antreibbare Welle so weit in axialer Richtung verschoben werden, dass das auf der antreibbaren Welle befindliche Zahnrad aus einer Position, in der das Zahnrad nicht mit den Zähnen der Zahnstange in Eingriff steht, in die erste Stellung verschoben wird, und/oder das Zahnrad wird mit der antreibbaren Welle aus der ersten Stellung in eine Position bewegt, in der die Zähne des Zahnrads seitlich versetzt neben den Zähnen der Zahnstange stehen. Das Verstellmittel kann in nur eine axiale Richtung wirken, oder ist es so ausgelegt, dass die antreibbare Welle mit dem Verstellmittel in entgegengesetzte Richtungen bewegt werden kann. Das Verstellmittel kann beispielsweise ein Handgriff sein, der mit der antreibbaren Welle verbunden ist und mit dem die antreibbare Welle in einer axialen Richtung gezogen oder geschoben werden kann. Der Handgriff kann beispielsweise auch ein Abschnitt der antreibbaren Welle sein, der um einen Winkel, beispielsweise 90°, zur axialen Richtung der antreibbaren Welle gekröpft ist. Das Verstellmittel kann aber auch ein motorischer Antrieb sein, mit dem die antreibbare Welle in axialer Richtung zwischen der ersten und zweiten Stellung hin und her bewegt wird.

Nach einer Ausgestaltung der Erfindung ist die antreibbare Welle in axialer Richtung und in Rotationsrichtung beweglich in zumindest zwei beabstandet zueinander angeordneten, fest mit dem Rahmen verbundenen Lagerböcken gehalten, auf die antreibbare Welle ist ein erster Sitzring aufgesetzt, und zwischen einem der Lagerböcke und dem ersten Sitzring ist eine erste Spannfeder angeordnet, die sich an ihrem ersten Ende auf einem der Lagerböcke und an ihrem zweiten Ende an dem ersten Sitzring abstützt, wobei die erste Spannfeder in einem eingefederten Zustand die antreibbare Welle in eine Richtung drückt, in der sich das Zahnrad in der zweiten Stellung befindet. Die Lagerböcke ermöglichen eine genaue und sichere Führung der antreibbaren Welle. Die erste Spannfeder baut Rückstellkräfte auf, wenn die antreibbare Welle mit dem ersten Sitzring gegen die Kraft der ersten Spannfeder in eine Richtung gedrückt wird. Dabei wird die erste Spannfeder vorteilhaft so eingebaut, dass sie das Zahnrad in gespanntem Zustand aus der ersten Stellung in die zweite Stellung drückt, in der das Zahnrad nicht in Eingriff steht mit der Zahnstange. Die angetriebene Welle steht dann in einer Art Parkposition. Die erste Spannfeder bildet auf die beschriebene Wirkungsweise ein Verstellmittel, mit dem die antreibbare Welle zumindest in eine axiale Richtung beweglich ist. Die erste Spannfeder ist in einem gespannten Zustand ein motorischer Antrieb, mit dem die antreibbare Welle in eine axiale Richtung bewegt werden kann. Durch die vorgeschlagene Kraftrichtung der ersten Spannfeder muss die antreibbare Welle mit dem Zahnrad bewusst gegen die Kraft der ersten Spannfeder aus der Parkposition in die erste Stellung gedrückt werden, in der das Zahnrad in Eingriff steht mit der Zahnstange. Die Kraft der ersten Spannfeder bewegt die antreibbare Welle mit dem Zahnrad sofort wieder in die zweite Stellung als Parkposition und Normalstellung zurück, sobald sich die Betätigungskraft gegen die erste Spannfeder verringert oder ganz wegfällt.

Nach einer Ausgestaltung der Erfindung ist der erste Sitzring auf der Außenseite der antreibbaren Welle befestigt. Der erste Sitzring kann dabei auf der Außenseite der antreibbaren Welle in verschiedenen Positionen befestigbar ausgebildet sein. Der erste Sitzring kann mit Spannschrauben auf der antreibbaren Welle befestigt sein. Bei einer glatten Außenkontur der antreibbaren Welle kann der erste Sitzring in verschiedenen Positionen auf der antreibbaren Welle fixiert sein. Die antreibbare Welle kann an ihrem Außenumfang auch ein Außengewinde aufweisen, auf das der erste Sitzring aufgeschraubt ist. Über das Außengewinde ist die Position des ersten Sitzrings entlang der Längsachse der antreibbaren Welle über die Länge des Gewindes stufenlos verstellbar. Wenn sich der erste Sitzring auf einem Außengewinde befindet, ist dieser gut zugänglich, wenn die Position des ersten Sitzrings verändert werden soll. Wird der erste Sitzring auf dem Außengewinde gedreht, ergibt sich durch eine entsprechend veränderte Position des ersten Sitzrings an der antreibbaren Welle eine veränderte Vorspannung der ersten Spannfeder. Die erste Spannfeder kann auf diese Weise auf einen gewünschten Wert eingestellt werden.

Nach einer Ausgestaltung der Erfindung ist auf der Außenseite der antreibbaren Welle ein zweiter Sitzring befestigt, über den die antreibbare Welle auf einer rahmenseitig abgestützten ersten Stützfläche abgestützt ist. Der zweite Sitzring kann der angetriebenen Welle dazu dienen, die antreibbare Welle in axialer Richtung in der zweiten Stellung und damit in der Parkposition zu halten, indem sich der zweite Sitzring auf der rahmenseitig abgestützten ersten Stützfläche abstützt, die gegen die Kraft der ersten Spannfeder einen Anschlag bildet. Wenn die erste Stützfläche nicht in den von der antreibbaren Welle ausgefüllten Raum oder in die Projektion der antreibbaren Welle in einer axialen Richtung hineinragt und insoweit kein Anschlag vorhanden ist, kann die antreibbare Welle in axialer Richtung auch an der ersten Stützfläche vorbei in axialer Richtung bewegt werden. Je nachdem, in welcher Position der zweite Sitzring auf der antreibbaren Welle befestigt ist, ergibt sich daraus die zweite Stellung, in der das Zahnrad in der Parkposition gehalten ist. Die räumliche Lage des Zahnrads in der zweiten Stellung ist auf diese Weise über den zweiten Sitzring bestimmbar. Bei dieser Ausgestaltung der Erfindung ist die antreibbare Welle also in einer axialen Richtung zumindest zwischen der vom zweiten Sitzring und der ersten Stützfläche vorgegebenen zweiten Stellung und der ersten Stellung, in der sich das Zahnrad in Eingriff befindet mit der Zahnstange, hin und her beweglich. Die Position des zweiten Sitzrings auf der antreibbaren Welle kann verstellbar ausgestaltet sein. Beispielsweise kann die antreibbare Welle über ein Außengewinde verfügen, auf das der zweite Sitzring aufgeschraubt ist, die Position des zweiten Sitzrings ist dann über die Länge des Gewindes stufenlos verstellbar. Der zweite Sitzring kann auch mit Spannschrauben auf die antreibbare Welle aufgespannt sein. Bei einer glatten Umfangsfläche der antreibbaren Welle kann der Sitzring dann auch in verschiedenen Positionen auf der antreibbaren Welle befestigt werden. Wenn die ersten und zweiten Sitzringe auf Positionen eingestellt sind, in denen auch in der zweiten Stellung des Zahnrads noch eine Restspannung in der ersten Spannfeder aufrechterhalten bleibt, ist die antreibbare Welle klapperfrei in dieser Stellung gehalten. Dadurch ist es ausgeschlossen, dass sich das Zahnrad auch bei Fahrbewegungen des Nutzfahrzeugs ungewollt in die erste Stellung bewegt.

Nach einer Ausgestaltung der Erfindung ist die antreibbare Welle als Hohlwelle ausgebildet und durch die Hohlwelle ist eine Verriegelungsstange hindurchgeführt, die in ihrer eingeschobenen Position den Heckausschub verriegelt und in ihrer ausgezogenen Position den Heckausschub freigibt. Indem die antreibbare Welle als Hohlwelle ausgebildet ist, ist es möglich, durch den Hohlraum der Hohlwelle eine Verriegelungsstange hindurchzuführen, mit der der Heckausschub verriegelt werden kann. Räumlich wird dadurch die Ver- und Entriegelung des Heckausschubs sowie der Antrieb für die Verstellung der Position des Heckausschubs zusammengefasst und die Bedienung dadurch vereinfacht. Die Verriegelungsstange wird durch die Hohlwelle gehalten und geführt. Die Hohlwelle kann als ein einfaches Rohr ausgeführt sein. Indem die Verriegelungsstange in der entriegelten Position ausgezogen ist, fällt die fehlende Verriegelung des Heckausschubs einem Fahrer sofort auf, wenn er auf das Nutzfahrzeug schaut, und es wird dadurch unwahrscheinlich, dass das Nutzfahrzeug versehentlich mit einem nicht verriegelten Heckausschub betrieben wird. Die Verriegelung erfolgt formschlüssig, indem die Verriegelungsstange beispielsweise durch passende Löcher im Heckausschub hindurchgeschoben wird. Der Heckausschub ist dann nicht mehr in einer Richtung quer zur axialen Richtung der Verriegelungsstange beweglich. Wenn die Verriegelungsstange aus den Löchern herausgezogen worden ist, kann der Heckausschub wieder in dieser Richtung bewegt werden. Im Heckausschub können in Auszugsrichtung mehrere Löcher angeordnet sein, um den Heckausschub in verschiedenen Positionen verriegeln zu können.

Nach einer Ausgestaltung der Erfindung ist auf die dem Zahnrad abgewandte Stirnseite der antreibbaren Welle drehfest eine Kulisse aufgesetzt, die eine Anzahl von Ausnehmungen aufweist, wobei zumindest eine erste der Ausnehmungen eine Umfangsform aufweist, die ein Passieren eines über die Umfangsfläche der Verriegelungsstange hervorstehenden Vorsprungs bei einer axialen Bewegung der Verriegelungsstange zulässt, und zumindest eine zweite der Ausnehmungen eine Ausformung aufweist, in der der Vorsprung bei einer Anlage an der Ausformung lagefixiert formschlüssig in der Kulisse gehalten ist, und über den in der Ausformung gehaltenen Vorsprung eine auf die Verriegelungsstange einwirkende Schubkraft und/oder Drehkraft über die Ausformung auf die antreibbare Welle übertragbar ist. Mit der vorstehend beschriebenen Ausgestaltung kann die Verriegelungsstange dazu benutzt werden, das Zahnrad mit den Zähnen der Zahnstange in Eingriff zu bringen und das auf die antreibbare Welle aufgesetzte Zahnrad rotierend anzutreiben, um damit den Heckausschub ein- oder auszufahren. Die Ausformung in der zweiten Ausnehmung hat einen Boden, an dem der Vorsprung zumindest bereichsweise anliegt, so dass der Vorsprung im Bereich der Ausformung nicht durch die zweite Ausnehmung in der Kulisse hindurchtreten kann, wie das bei der ersten Ausnehmung der Fall ist

Mit der ersten Ausnehmung ist es möglich, die Verriegelungsstange trotz des Vorsprungs durch die Kulisse hindurch bis in die Verriegelungsstellung einzuschieben. Der Vorsprung passiert bei einer passenden Winkelstellung der Verriegelungsstange um ihre Erstreckungsachse herum kollisionsfrei die erste Ausnehmung in der Kulisse bei einer Einschubbewegung der Verriegelungsstange. Die Verriegelungsstange kann aber mit dem Vorsprung auch aus der Verriegelungsstellung durch die erste Ausnehmung hindurch so weit aus der antreibbaren Welle herausgezogen werden, dass sich der Vorsprung außerhalb der antreibbaren Welle befindet und mit der Verriegelungsstange frei drehbar ist. Der Vorsprung kann dann durch eine Drehung der Verriegelungsstange um einen Drehwinkel um ihre Erstreckungsachse herum in eine Position gebracht werden, bei der er bei einer axialen Bewegung der Verriegelungsstange in die entgegengesetzte Richtung auf das Zahnrad zu in die Ausformung in der zweiten Ausnehmung eintaucht und dort durch eine zueinander kompatible Ausformung des Vorsprungs und der Ausformung in der zweiten Ausnehmung formschlüssig lagefixiert gehalten ist.

Wird die Schubbewegung der Verriegelungsstange in die Richtung des Zahnrads fortgesetzt, wird die antreibbare Welle mit dem darauf befindlichen Zahnrad in einer axialen Richtung aus der Parkposition in die erste Stellung bewegt, in der sich die Zähne des Zahnrads in Eingriff befinden mit den Zähnen der Zahnstange. Dabei wird gleichzeitig die erste Spannfeder eingedrückt. Wird der auf die antreibbare Welle einwirkende Druck gehalten, so wird eine auf die Verriegelungsstange einwirkende Rotationskraft über den Vorsprung und die Ausformung in der zweiten Ausnehmung auf die antreibbare Welle übertragen, die die Rotationskraft und die daraus resultierende Drehbewegung wiederum auf das Zahnrad und das Zahnrad auf die Zahnstange überträgt. Die Zahnstange wandelt die rotierende Bewegung des Zahnrads in eine lineare Bewegung des Heckausschubs um. Auf diese Weise kann mit einer Kurbelbewegung der Verriegelungsstange der Heckausschub in einer linearen Bewegung je nach Drehrichtung der Verriegelungsstange hin und her bewegt werden.

Wird der Druck auf die Verriegelungsstange gegen die Kraft der ersten Spannfeder reduziert, drücken die in der ersten Spannfeder bei der Eintauchbewegung aufgebauten Rückstellkräfte die antreibbare Welle wieder in Richtung der zweiten Stellung zurück, sodass die Zahnräder des Zahnrads und die Zähne der Zahnstange wieder außer Eingriff gelangen. Bei einer fortgesetzten Rückwärtsbewegung der Verriegelungsstange kann der Vorsprung wieder aus der Ausformung in der zweiten Ausnehmung herausgezogen werden, wodurch die Verriegelungsstange dann wieder frei drehbar ist, ohne dabei die antreibbare Welle mit zu drehen. Wenn die Verriegelungsstange so um ihre Längsachse gedreht wird, dass der Vorsprung genau auf die erste Ausnehmung ausgerichtet ist, kann die Verriegelungsstange wieder in die antreibbare Welle hinein in ihre Verriegelungsstellung zurückgeschoben werden.

Je nach Ausgestaltung der Erfindung können auf der Verriegelungsstange mehrere Vorsprünge ausgebildet sein, beispielsweise zwei Vorsprünge, und in der Kulisse können auch mehrere erste und zweite Ausnehmungen ausgebildet sein, beispielsweise zwei erste Ausnehmungen und zwei zweite Ausnehmungen, die zu mehreren Vorsprüngen passend zueinander ausgerichtet sind. Durch mehrere Vorsprünge, die über den Umfang der Verriegelungsstange verteilt sind, werden die bei einer Einschubbewegung und bei einer Rotationsbewegung auf den Vorsprung, die Kulisse und die antreibbare Welle einwirkenden Kräfte gleichmäßiger auf den Umfang der antreibbaren Welle verteilt, die Handhabung und das Bediengefühl ist dadurch verbessert.

Nach einer Ausgestaltung der Erfindung ist auf den Außenumfang der Verriegelungsstange ein Mitnehmer aufgesetzt, der bei einer Auszugsbewegung der Verriegelungsstange gegen eine auf die Verriegelungsstange aufgesetzte und darauf in axialer Richtung bewegliche Mitnehmerscheibe anschlägt, wobei auf der dem Mitnehmer abgewandten Seite der Mitnehmerscheibe eine zweite Spannfeder auf die Verriegelungsstange aufgesetzt ist, die sich in einer Auszugsstellung der Verriegelungsstange an einem ersten Ende auf der Mitnehmerscheibe und an einem zweiten Ende auf einer rahmenseitig abgestützten zweiten Stützfläche abstützt, die Länge der zweiten Spannfeder, die Position der zweiten Stützfläche zur Kulisse und die Position des Mitnehmers auf der Verriegelungsstange so gewählt sind, dass die zweite Spannfeder vom Mitnehmer eingedrückt ist, wenn der Vorsprung in axialer Richtung so weit aus der antreibbaren Welle herausgezogen ist, dass sich der Vorsprung außerhalb der antreibbaren Welle befindet, und die Rückstellkraft, die die zweite Spannfeder in dieser Stellung des Mitnehmers aufgebaut hat, grösser ist als die Rückstellkraft der ersten Spannfeder, die diese in der zweiten Stellung des Zahnrads aufweist. Der Sinn dieser Konstruktion besteht darin, bei einer Auszugsbewegung der Verriegelungsstange, die erforderlich ist, bevor der Vorsprung auf die antreibbare Welle aufgesetzt werden kann, um die antreibbare Welle in die erste Stellung zu bewegen und den Heckausschub zu bewegen, in der zweiten Spannfeder eine so große Rückstellkraft aufzubauen, dass die zweite Spannfeder die Verriegelungsstange und mit der Verriegelungsstange auch den Vorsprung in die Ausformung drückt, darin hält und die antreibbare Welle gegen die Rückstellkraft der ersten Spannfeder auf der Verriegelungsstange in eine Position bewegt, in der sich das Zahnrad in der ersten Stellung befindet. Wenn eine Bedienperson die Verriegelungsstange also nach dem Ausziehen und Eindrücken der zweiten Spannfeder loslässt, schnappt diese von der zweiten Spannfeder getrieben zurück, drückt dabei den Vorsprung in die Ausformung und danach die antreibbare Welle gegen die Rückstellkraft der ersten Spannfeder in eine Position, in der sich das Zahnrad in der ersten Stellung befindet. Ist diese Position erreicht, kann die Verriegelungsstange und damit das Zahnrad gedreht werden, um den Heckausschub zu bewegen. Eine gesonderte Betätigung irgendwelcher Umschalter, Stellmittel und dergleichen ist nicht erforderlich.

Wenn die Verriegelungsstange wieder in die eingeschobene Stellung, insbesondere die Verriegelungsstellung, bewegt werden soll, wird die Verriegelungsstange zunächst gegen die Kraft der zweiten Spannfeder zurückgezogen, wobei sich zunächst die antreibbare Welle zusammen mit dem Zahnrad von der ersten Spannfeder getrieben selbsttätig wieder in die zweite Stellung bewegt. Wird die Verriegelungsstange weiter gegen die Kraft der zweiten Spannfeder zurückgezogen, kann der Vorsprung aus der Ausformung in der zweiten Ausnehmung herausgezogen und die Verriegelungsstange um ihre Achse so weit gedreht werden, bis der Vorsprung vor der ersten Ausnehmung steht und die Verriegelungsstange dadurch mit dem Vorsprung in ihre Verriegelungsstellung in die antreibbare Welle hinein eingeschoben werden kann.

Bei der vorgeschlagenen Ausgestaltung kann sowohl der Antrieb des Zahnstangengetriebes als auch die Ver- und Entriegelung des Heckausschubs nur mit der Verriegelungsstange erfolgen. Es genügt eine einfache Auszugs- und Einschubbewegung sowie eine jeweilige Drehung der Verriegelungsstange. Durch die federkraftbetätigte Ein- und Auskupplung des Zahnrads wird vermieden, dass das Zahnrad in Eingriff mit der Zahnstange bleibt, obwohl der Heckausschub bereits in einer Position verriegelt worden ist.

Es wird darauf hingewiesen, dass die die Merkmale des Anspruchs 1 grundsätzlich mit den Merkmalen der einzelnen Unteransprüche jeweils für sich oder in einer beliebigen Kombination mehrerer Unteransprüche miteinander kombinierbar ist, soweit dem keine technisch zwingenden Hindernisse entgegenstehen.

Weitere Abwandlungen und Ausführungen der Erfindung lassen sich der nachfolgenden gegenständlichen Beschreibung, den Zeichnungen und den Ansprüchen entnehmen. Die Erfindung soll nachfolgend anhand eines Ausführungsbeispiels beschrieben werden. Es zeigen:
- Fig. 1:: eine Ansicht von schräg hinten auf ein Nutzfahrzeug mit einem Heckausschub,
- Fig. 2:: eine vergrößerte Ansicht von schräg oben auf den Heckbereich des Fahrzeugs,
- Fig. 3:: die in Fig. 2 gezeigte Ansicht des Heckbereichs des Fahrzeugs aus einer anderen Perspektive,
- Fig. 4:: die Verstellvorrichtung mit den Verstellmitteln in einer Ausschnittansicht,
- Fig. 5:: die Verriegelungsstange in einer ausgezogenen Stellung,
- Fig. 5a:: eine vergrößerte Ansicht von schräg oben auf die Kulisse,
- Fig. 6:: die Ansicht aus Fig. 5 mit einer um 90° gedrehten Verriegelungsstange,
- Fig. 6a:: die Vorsprünge in einer Ausrichtung auf die Ausformungen,
- Fig. 7:: den Ausschnitt aus Figur 5 mit in die Ausformung eingesetzten Vorsprung,
- Fig. 7a:: eine vergrößerte Ansicht der Kulisse,
- Fig. 8:: das in der ersten Stellung befindliche Zahnrad, das in Eingriff steht mit der Zahnstange, und
- Fig. 9:: die Verstellvorrichtung in der zweiten Stellung vor dem Herausziehen der Verriegelungsstange.

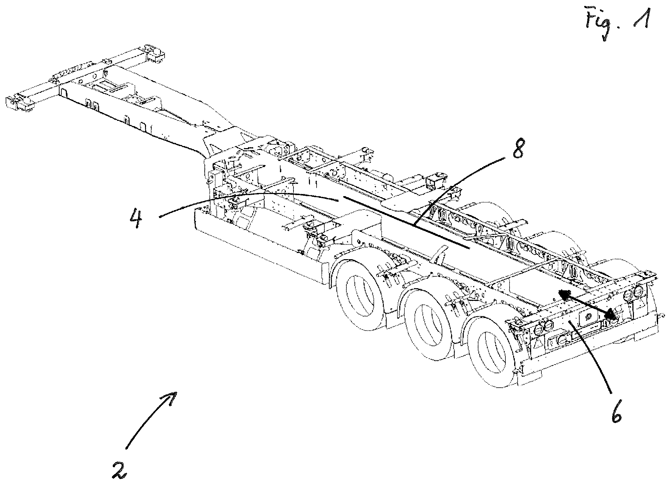

**In** Fig. 1 ist eine Ansicht von schräg hinten auf ein Nutzfahrzeug 2 mit einem Rahmen 4 gezeigt, in dessen Heck sich ein Heckausschub 6 befindet, der in Längserstreckungsrichtung 8 des Nutzfahrzeugs 2 zwischen einer eingeschobenen Stellung und einer ausgezogenen Stellung hin und her verstellbar ist. Die Beweglichkeit des Heckausschubs 6 ist durch einen Doppelpfeil angedeutet, der sich in der Längserstreckungsrichtung 8 erstreckt.

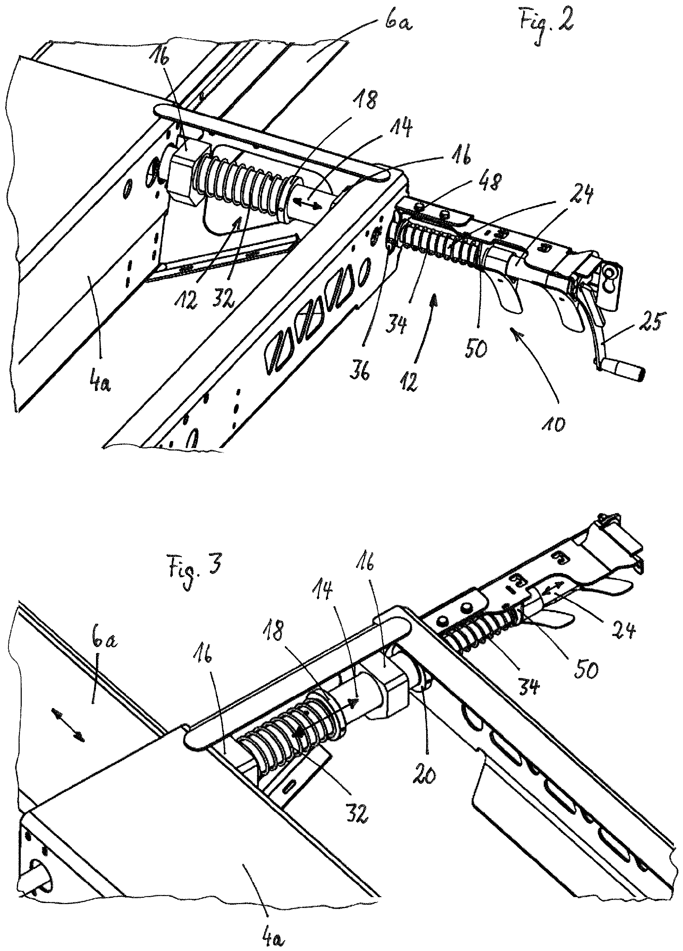

Die Fig. 2 zeigt eine vergrößerte Ansicht von schräg oben auf den Heckbereich des Fahrzeugs 2. In dieser Ansicht ist die Verstellvorrichtung 10 erkennbar, mit der die antreibbare Welle 14, mit der das Zahnrad 26 drehfest verbunden ist, über Verstellmittel 12 zwischen einer ersten Stellung, in der die Zähne des Zahnrads 26 in Eingriff mit Zähnen der Zahnstange 28 stehen, und einer zweiten Stellung, in der die Zähne des Zahnrads 26 nicht in Eingriff stehen mit den Zähnen der Zahnstange 28, in der Richtung des Doppelpfeils hin und her beweglich ist. Die antreibbare Welle 14 ist auf zwei Lagerböcken 16 drehbar und in axialer Richtung beweglich gelagert. Auf dem Außenumfang der antreibbaren Welle 14 kann sich ein zeichnerisch nicht näher dargestelltes Außengewinde befinden. Auf die antreibbare Welle 14 ist ein erster Sitzring 18 sowie ein zweiter Sitzring 20 in einer jeweiligen Position angebracht. Im Ausführungsbeispiel sind die Sitzringe 18, 20 über Spannschrauben auf der antreibbaren Welle 14 befestigt.

Die antreibbare Welle 14 ist als Hohlwelle ausgeführt, in die die Verriegelungsstange 24 eingeschoben ist. Während das zur Außenseite des Nutzfahrzeugs 2 weisende Ende der Verriegelungsstange 24 eine Kurbel 25 aufweist, reicht das in Fig. 2 nicht sichtbare Ende der Verriegelungsstange 24 bis in den Mittelkasten 4a des Rahmens 4 hinein, um den darin gehaltenen Heckausschub 6 in der Verriegelungsstellung der Verriegelungsstange 24 zu verriegeln. Die seitliche Wand des Mittelkastens 4a weist eine in Fig. 2 zeichnerisch nicht näher dargestellte Öffnung auf, durch die die Verriegelungsstange 24 hindurchgeführt ist. Zumindest wenn sich die antreibbare Welle 14 sowie das drehfest darauf aufgesetzte Zahnrad 26 in der ersten Stellung befinden, reichen auch diese bis in den Innenraum des Mittelkastens 4a hinein, damit die Zähne des Zahnrads 26 dort mit den Zähnen der im Mittelkasten 4a angeordneten Zahnstange 28 kämmen können. In Fig. 2 ist die Verriegelungsstange 24 in ihrer eingeschobenen Verriegelungsstellung gezeigt. Die Verriegelungsstange 24 ist aus der eingeschobenen Verriegelungsstellung in axialer Richtung nach außen ausziehbar. In der ausgezogenen Stellung der Verriegelungsstange 24 kann die Kurbel 25 von Hand gedreht werden, wobei sich dann die Verriegelungsstange 24 mitdreht.

**In** der Fig. 2 ist die erste Spannfeder 32 erkennbar, die auf die antreibbare Welle 14 aufgesetzt ist. Die zweite Spannfeder 34 ist auf die Verriegelungsstange 24 aufgesetzt. Während sich die erste Spannfeder 32 an einem ersten Ende am Lagerbock 16 und am zweiten Ende am ersten Sitzring 18 abstützt, stützt sich die zweite Spannfeder 34 an ihrem ersten Ende auf der Mitnehmerscheibe 48 und an ihrem zweiten Ende auf die zweite Stützfläche 50 ab.

**In** der Fig. 2 ist außerdem noch die Kulisse 36 erkennbar, deren Funktion nachfolgend näher erläutert wird.

Die Fig. 3 zeigt die in Fig. 2 gezeigte Ansicht des Heckbereichs des Fahrzeugs 2 aus einer anderen Perspektive. **In** der geänderten Perspektive ist der zweite Lagerbock 16 und die zweite Stützfläche 50 zu sehen. Die axiale Beweglichkeit der antreibbaren Welle 14 und der Verriegelungsstange 24 sind jeweils durch Doppelpfeile kenntlich gemacht.

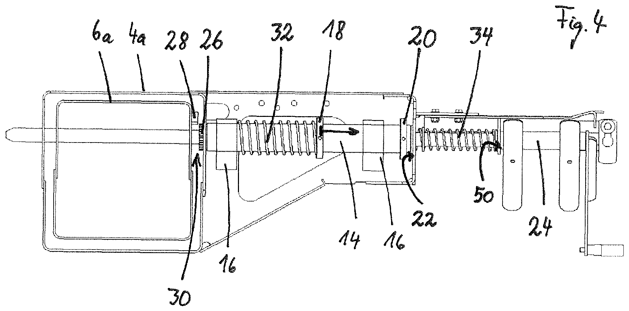

Zur Erläuterung des Funktionsablaufes ist in Fig. 4 die Verstellvorrichtung 10 mit den Verstellmitteln 12 in einer Ausschnittansicht dargestellt. Die Verstellmittel 12 sind im Ausführungsbeispiel insbesondere die Spannfedern 32, 34. Die Verriegelungsstange 24 befindet sich in dieser Ansicht in ihrer eingeschobenen Verriegelungsstellung. In der eingeschobenen Stellung erstreckt sich die Verriegelungsstange 24 quer zum Mittelkasten 4a. In den Mittelkasten 4a ist ein Kastenprofil 6a eingeschoben, mit dem der Heckausschub 6 im Mittelkasten 4a gehalten ist. Die Verriegelungsstange 24 durchdringt den Mittelkasten 4a und das Kastenprofil 6a durch entsprechende Öffnungen, wodurch der Heckausschub 6 formschlüssig in seiner Position verriegelt ist.

In der in Fig. 4 gezeigten Schnittansicht sind das Zahnrad 26 sowie die Zahnstange 28 als Teile des Zahnstangengetriebes 30 zu sehen. Auch ist der zweite Sitzring 20 erkennbar, der auf der ersten Stützfläche 22 abgestützt ist. Die erste Spannfeder 32 drückt die antreibbare Welle 14 über den ersten Sitzring 18 in eine durch einen Pfeil kenntlich gemachte Richtung von der Zahnstange 28 weg, sodass sich das Zahnrad 26 in der zweiten Stellung befindet und dort auch von der ersten Spannfeder 32 gehalten wird.

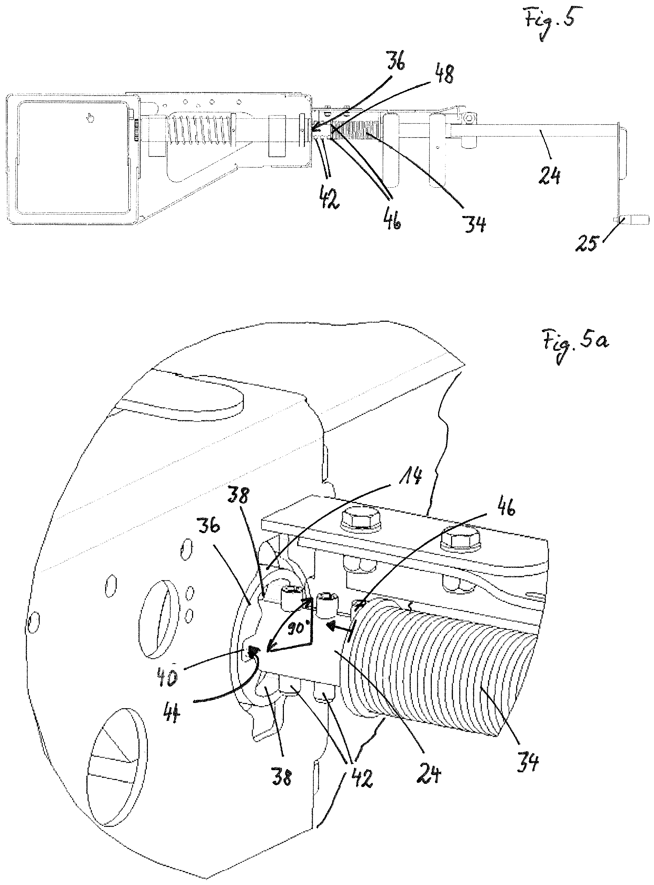

In Fig. 5 ist die Verriegelungsstange 24 ausgezogen. In der ausgezogenen Stellung der Verriegelungsstange 24 sind die Vorsprünge 42 zu sehen, die bei einer Einschubbewegung aus der in Fig. 5 gezeigten Position auf die Kulisse 36 aufgesetzt oder in eine Ausnehmung 40 eingesetzt werden können. Außerdem sind die Mitnehmer 46 erkennbar, die im Verlauf der Auszugsbewegung der Verriegelungsstange 24 an die Mitnehmerscheibe 48 angeschlagen und bei einer fortgesetzten Auszugsbewegung die Mitnehmerscheibe 48 gegen die zweite Spannfeder 34 gedrückt haben, sodass diese sich in dem in Fig. 5 gezeigten komprimierten Zustand befindet.

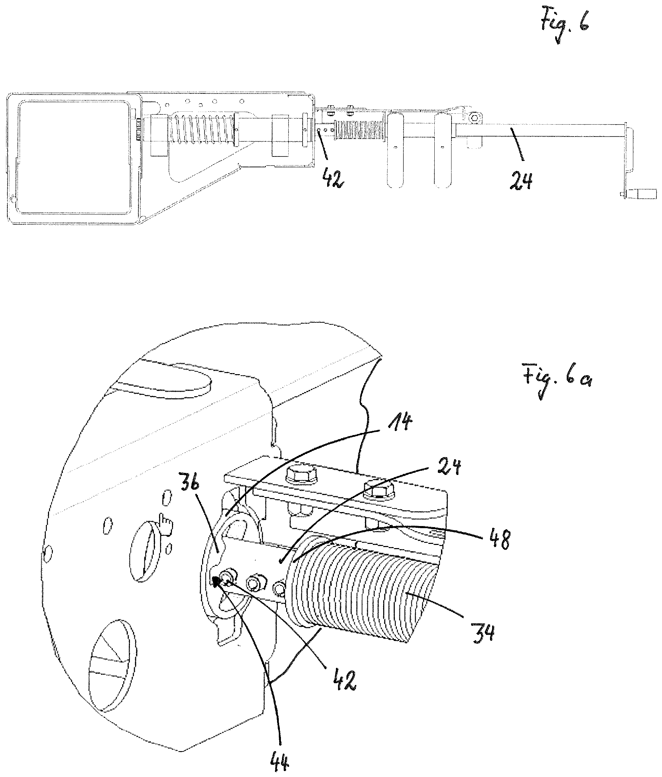

Die Fig. 5a zeigt eine vergrößerte Ansicht von schräg oben auf die Kulisse 36, wie sie sich darstellt, wenn sich die Verriegelungsstange 24 in der in Fig. 5 gezeigten Position befindet. In dieser Ansicht sind zwei erste Ausnehmungen 38 und eine zweite Ausnehmung 40 erkennbar. Die Verriegelungsstange 24 befindet sich in einer Rotationsstellung, in der diese in axialer Richtung in die antreibbare Welle 14 eingeschoben werden kann, ohne dass dabei die Vorsprünge 42 mit den Kanten der ersten Ausnehmungen 38 kollidieren. Wenn die Verriegelungsstange 24 aus der in der Fig. 5a gezeigten Stellung um ihre Drehachse um einen Drehwinkel von 90° gedreht wird, liegen die Vorsprünge 42 wie in den Fig. 6, 6a gezeigt in einer Flucht zur zweiten Ausnehmung 40. Wenn die Verriegelungsstange 24 aus dieser Position wieder in Richtung der antreibbaren Welle 14 eingeschoben wird, tauchen die Vorsprünge 42 in die Ausformung 44 in der zweiten Ausnehmung 40 ein. Die Vorsprünge 42 sind dann in einer jeweiligen Ausformung 44 in axialer und radialer Richtung formschlüssig gehalten. Bei einem auf die Kulisse 36 über die Vorsprünge 42 und die Ausformung 44 weiter ausgeübtem Druck wird die antreibbare Welle 14 auf die Zahnstange 28 zu bewegt, und eine an der Kurbel 25 erzeugte Rotationsbewegung wird ebenfalls als eine Drehbewegung auf die antreibbare Welle 14 übertragen.

Der auf die Verriegelungsstange 24 einwirkende Druck kann insbesondere über die zweite Spannfeder 34 erzeugt werden. Da die zweite Spannfeder 34 bei der Auszugsbewegung der Verriegelungsstange 24 über die Mitnehmer 46 und die Mitnehmerscheibe 48 zusammengedrückt worden ist, haben sich in der zweiten Spannfeder 34 Rückstellkräfte aufgebaut, die beim Loslassen der Verriegelungsstange 24 durch eine Bedienperson aus der in Fig. 5 gezeigten Position auf die Mitnehmerscheibe 48, die Mitnehmer 46, die Vorsprünge 42 und die Ausformungen 44 auf die Kulisse 36 drücken, die ihrerseits die antreibbare Welle 14 mit dem darauf aufgesetzten Zahnrad 26 in die erste Stellung bewegen. Wenn die Rückstellkräfte in der zweiten Spannfeder 34 dabei größer sind als die Federkräfte in der ersten Spannfeder 32, drückt die zweite Spannfeder 34 das Zahnrad 26 auch gegen die Kraft der ersten Spannfeder 32 in die erste Stellung.

In der Fig. 6 ist die Verriegelungsstange 24 in einer Drehlage gezeigt, nachdem sie aus der in Fig. 5 gezeigten Stellung um 90° gedreht worden ist. Wie auch die Fig. 6a zeigt, stehen die Vorsprünge 42 nun direkt vor den Ausformungen 44.

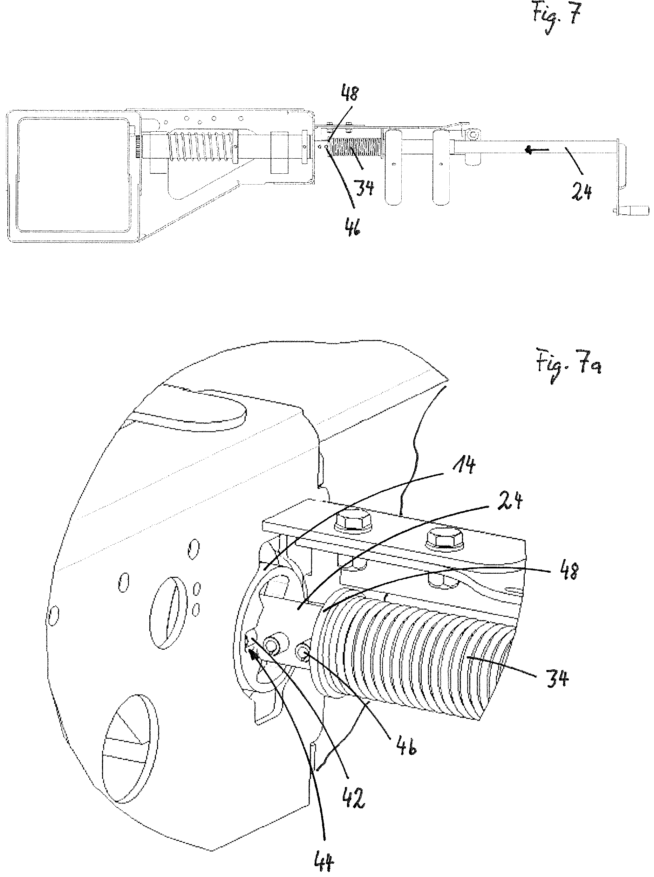

Die Fig. 7, 7a zeigen den Ausschnitt aus Figur 5 mit einer dazu um 90° gedrehten Verriegelungsstange 24 mit einem in die Ausformung 44 eingesetztem Vorsprung 42, nachdem die Verriegelungsstange 24 von einer Bedienperson losgelassen worden ist und die zweite Spannfeder 34 die Verriegelungsstange 14 mit dem Vorsprung 42 in die Ausformung 44 gedrückt hat.

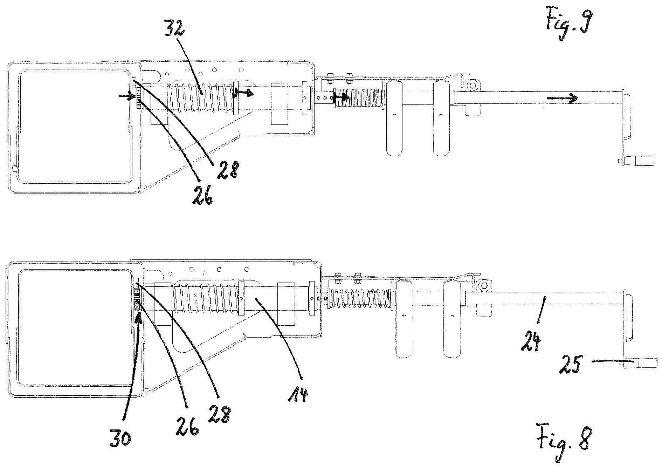

Die Fig. 8 zeigt das mit der antreibbaren Welle 14 in der ersten Stellung befindliche Zahnrad 26, das nun in Eingriff steht mit der Zahnstange 28. **In** dieser ersten Stellung kann das Zahnrad 26 mit der Kurbel 25 und der Verriegelungsstange 24 gedreht werden, um den Heckausschub 6 ein- oder auszufahren. Wenn eine gewünschte Position für den Heckausschub 6 erreicht ist, wird die Verriegelungsstange 24 wieder nach außen gezogen, wie das in Fig. 9 angedeutet ist. Dadurch bewegt sich das Zahnrad 26 mit der antreibbaren Welle 14 wieder in die zweite Stellung zurück, in der die Zähne des Zahnrads 26 wieder außer Eingriff mit den Zähnen der Zahnstange 28 sind. Wenn durch die Auszugsbewegung der Verriegelungsstange 24 der Druck aus der zweiten Spannfeder 34 auf die erste Spannfeder 32 wegfällt, kann die erste Spannfeder 32 das Zahnrad 26 wieder in die zweite Stellung bewegen. Wenn bei der Auszugsbewegung der Verriegelungsstange 24 der Vorsprung 42 aus der Ausformung 44 herausgezogen ist, kann die Verriegelungsstange 24 wieder um 90° gedreht werden, um danach die Verriegelungsstange 24 mit dem Vorsprung 42 durch die erste Ausnehmung 38 in den Hohlraum der antreibbaren Welle 14 einzuschieben und so weit durchzuschieben, bis die Verriegelungsstange 24 wieder in ihrer in Fig. 4 gezeigten eingeschobenen Verriegelungsstellung ist.

Die Erfindung ist nicht auf das vorstehend beschriebene Ausführungsbeispiel sondern auf die Ansprüche beschränkt. Dem Fachmann bereitet es keine Schwierigkeiten, das Ausführungsbei spiel auf eine ihm als geeignet erscheinende Weise abzuwandeln, um es an einen konkreten Anwendungsfall anzupassen, allerdings immer beschränkt im Rahmen des Schutzumfangs der vorliegenden Ansprüche.

### Bezugszeichenliste

- 2: Nutzfahrzeug
- 4: Rahmen
- 4a: Mittelkasten
- 6: Heckausschub
- 6a: Kastenprofil
- 8: Längserstreckungsrichtung
- 10: Verstellvorrichtung
- 12: Verstellmittel
- 14: antreibbare Welle
- 16: Lagerbock
- 18: erster Sitzring
- 20: zweiter Sitzring
- 22: erste Stützfläche
- 24: Verriegelungsstange
- 25: Kurbel
- 26: Zahnrad
- 28: Zahnstange
- 30: Zahnstangengetriebe
- 32: erste Spannfeder
- 34: zweite Spannfeder
- 36: Kulisse
- 38: erste Ausnehmung
- 40: zweite Ausnehmung
- 42: Vorsprung
- 44: Ausformung
- 46: Mitnehmer
- 48: Mitnehmerscheibe
- 50: zweite Stützfläche

## Patentansprüche

1. Nutzfahrzeug (2) mit einem am Rahmen (4) des Nutzfahrzeugs (2) gehaltenen Heckausschub (6), der mittels eines Zahnstangengetriebes (30) in Längserstreckungsrichtung (8) des Nutzfahrzeugs (2) zwischen verschiedenen Positionen beweglich ist, wobei eine Zahnstange (28) des Zahnstangengetriebes (30) mit dem Heckausschub (6) verbunden und ein Zahnrad (26) des Zahnstangengetriebes (30) auf einer mit dem Rahmen (4) verbundenen antreibbaren Welle (14) gehalten ist, und einer Verriegelungsvorrichtung, bei deren Betätigung der Heckausschub (6) in zumindest einer Position zum Rahmen (4) verriegelt gehalten ist, **dadurch gekennzeichnet, dass** das Zahnrad (26) mit einer Verstellvorrichtung (10) verbunden ist, mit der das Zahnrad (26) zwischen einer ersten Stellung, in der die Zähne des Zahnrads (26) in Eingriff mit Zähnen der Zahnstange (28) stehen, und einer zweiten Stellung, in der die Zähne des Zahnrads (26) nicht in Eingriff stehen mit den Zähnen der Zahnstange (28), hin und her beweglich ist.

2. Nutzfahrzeug (2) nach Anspruch 1, **dadurch gekennzeichnet, dass** die Verstellvorrichtung (10) als ein Verstellmittel (12) ausgebildet ist, mit dem die mit dem Rahmen (4) verbundene antreibbare Welle (14) mit dem damit verbundenen Zahnrad (26) in einer axialen Richtung zwischen den ersten und zweiten Stellungen beweglich ist.

3. Nutzfahrzeug (2) nach Anspruch 2, **dadurch gekennzeichnet, dass** die antreibbare Welle (14) in axialer Richtung und in Rotationsrichtung beweglich in zumindest zwei beabstandet zueinander angeordneten, fest mit dem Rahmen (4) verbundenen Lagerböcken (16) gehalten ist, auf die antreibbare Welle (14) ein erster Sitzring (18) aufgesetzt ist, und zwischen einem der Lagerböcke (16) und dem ersten Sitzring (18) eine erste Spannfeder (32) angeordnet ist, die sich an ihrem ersten Ende auf dem Lagerbock (16) und an ihrem zweiten Ende an dem ersten Sitzring (18) abstützt, wobei die erste Spannfeder (32) in einem eingefederten Zustand die antreibbare Welle (14) in eine Richtung drückt, in der sich das Zahnrad (26) in der zweiten Stellung befindet.

4. Nutzfahrzeug nach Anspruch 3, **dadurch gekennzeichnet, dass** der erste Sitzring (18) auf der Außenseite der antreibbaren Welle (14) befestigt ist.

5. Nutzfahrzeug (2) nach Anspruch 4, **dadurch gekennzeichnet, dass** auf der Außenseite der antreibbaren Welle (14) ein zweiter Sitzring (20) befestigt ist, über den die antreibbare Welle (14) auf einer rahmenseitig abgestützten ersten Stützfläche (22) abgestützt ist.

6. Nutzfahrzeug (2) nach einem der vorhergehenden Ansprüche, **dadurch gekennzeichnet, dass** die antreibbare Welle (14) als Hohlwelle ausgebildet ist und durch die Hohlwelle eine Verriegelungsstange (24) hindurchgeführt ist, die in ihrer eingeschobenen Position den Heckausschub (6) verriegelt und in ihrer ausgezogenen Position den Heckausschub (6) freigibt.

7. Nutzfahrzeug (2) nach Anspruch 6, **dadurch gekennzeichnet, dass** auf die dem Zahnrad (26) abgewandte Stirnseite der antreibbaren Welle (14) drehfest eine Kulisse (36) aufgesetzt ist, die eine Anzahl von Ausnehmungen (38, 40) aufweist, wobei zumindest eine erste der Ausnehmungen (38, 40) eine Umfangsform aufweist, die ein Passieren eines über die Umfangsfläche der Verriegelungsstange (24) hervorstehenden Vorsprungs (42) bei einer axialen Bewegung der Verriegelungsstange (24) zulässt, und zumindest eine zweite der Ausnehmungen (38, 40) eine Ausformung (44) aufweist, in der der Vorsprung (42) bei einer Anlage an der Ausformung (44) lagefixiert formschlüssig in der Kulisse (36) gehalten ist, und über den in der Ausformung (44) gehaltenen Vorsprung (42) eine auf die Verriegelungsstange (24) einwirkende Schubkraft und/oder Drehkraft über die Ausformung (44) auf die antreibbare Welle (14) übertragbar ist.

8. Nutzfahrzeug (2) nach Anspruch 7, **dadurch gekennzeichnet, dass** auf den Außenumfang der Verriegelungsstange (24) ein Mitnehmer (46) aufgesetzt ist, der bei einer Auszugsbewegung der Verriegelungsstange (24) gegen eine auf die Verriegelungsstange (24) aufgesetzte und darauf in axialer Richtung bewegliche Mitnehmerscheibe (48) anschlägt, wobei auf der dem Mitnehmer (46) abgewandten Seite der Mitnehmerscheibe (48) eine zweite Spannfeder (34) auf die Verriegelungsstange (24) aufgesetzt ist, die sich in einer Auszugsstellung der Verriegelungsstange (24) an einem ersten Ende auf der Mitnehmerscheibe (48) und an einem zweiten Ende auf einer rahmenseitig abgestützten zweiten Stützfläche abstützt, die Länge der zweiten Spannfeder (34), die Position der zweiten Stützfläche (50) zur Kulisse (36) und die Position des Mitnehmers (46) auf der Verriegelungsstange (24) so gewählt sind, dass die zweite Spannfeder (34) vom Mitnehmer (46) eingedrückt ist, wenn der Vorsprung (42) in axialer Richtung so weit aus der antreibbaren Welle (14) herausgezogen ist, dass sich der Vorsprung (42) außerhalb der antreibbaren Welle (14) befindet, und die Rückstellkraft, die die zweite Spannfeder (34) in dieser Stellung des Mitnehmers (46) aufgebaut hat, grösser ist als die Rückstellkraft der ersten Spannfeder (32), die diese in der zweiten Stellung des Zahnrads (26) aufweist.

## Claims

1. Commercial vehicle (2) with a rear extension (6) held on the frame (4) of the commercial vehicle (2), which is movable between different positions in the longitudinal direction (8) of the commercial vehicle (2) by means of a rack-and-pinion gear (30), wherein a rack (28) of the rack-and-pinion gear (30) is firmly connected with the rear extension (6) and a gearwheel (26) of the rack-and-pinion gear (30) is held on a drivable shaft (14) connected with the frame (4), and a locking device, when actuated, the rear extension (6) is held locked in at least one position relative to the frame (4), **characterized in that** the gearwheel (26) is connected with an adjusting device (10) by means of which the gearwheel (26) can be moved back and forth between a first position, in which the teeth of the gearwheel (26) are in engagement with teeth of the rack (28), and a second position, in which the teeth of the gearwheel (26) are not in engagement with the teeth of the rack (28).

2. Commercial vehicle (2) according to claim 1, **characterized in that** the adjusting device (10) is designed as an adjusting means (12) with which the drivable shaft (14) connected with the frame (4) with the gearwheel (26) connected thereto can be moved in an axial direction between the first and second positions.

3. Commercial vehicle (2) according to claim 2, **characterized in that** the drivable shaft (14) is held movably in the axial direction and in the direction of rotation in at least two bearing blocks (16) which are arranged at a distance from one another and are firmly connected with the frame (4), a first seat ring (18) is placed on the drivable shaft (14), and a first tension spring (32) is arranged between one of the bearing blocks (16) and the first seat ring (18), which spring is supported at its first end on the bearing block (16) and at its second end on the first seat ring (18), the first tension spring (32), in a deflected state, pressing the drivable shaft (14) in a direction in which the gearwheel (26) is located in the second position.

4. Commercial vehicle chassis according to claim 3, **characterized in that** the first seat ring (18) is fastened on the outside of the drivable shaft (14).

5. Commercial vehicle (2) according to claim 4, **characterized in that** a second seat ring (20) is fastened to the outside of the drivable shaft (14), via which the drivable shaft (14) is supported on a first support surface (22) supported on the frame side.

6. Commercial vehicle (2) according to one of the preceding claims, **characterized in that** the drivable shaft (14) is designed as a hollow shaft and a locking rod (24) is passed through the hollow shaft, which locking rod locks the rear extension (6) in its pushed-in position and releases the rear extension (6) in its extended position.

7. Commercial vehicle (2) according to claim 6, **characterized in that** a guide (36), which has a number of recesses (38, 40), is mounted in a rotationally fixed manner on the end face of the drivable shaft (14) facing away from the gearwheel (26), wherein at least a first of the recesses (38, 40) has a circumferential shape which allows a projection (42), which projects beyond the circumferential surface of the locking rod (24) to pass through during an axial movement of the locking rod (24), and at least a second one of the recesses (38, 40) has a shaping (44) in which the projection (42) is held in a positively locking position in the guide (36) when bearing against the shaping (44), and a thrust force and/or rotational force acting on the locking rod (24) can be transmitted via the shaping (44) to the drivable shaft (14) via the projection (42) held in the shaping (44).

8. Commercial vehicle (2) according to claim 7, **characterized in that** a driver (46) is mounted on the outer circumference of the locking rod (24), which, during an extension movement of the locking rod (24), strikes against a driver plate (48) mounted on the locking rod (24) and movable thereon in the axial direction, wherein a second tension spring (34) is placed on the locking rod (24) on the side of the driver plate (48) facing away from the driver (46), which, in an extended position of the locking rod (24), is supported at a first end on the driver plate (48) and at a second end on a second support surface supported on the frame side, the length of the second tension spring (34), the position of the second support surface (50) relative to the guide (36) and the position of the driver (46) on the locking rod (24) are selected such that the second tension spring (34) is pressed in by the driver (46), when the projection (42) is pulled out of the drivable shaft (14) in the axial direction to such an extent that the projection (42) is located outside the drivable shaft (14), and the restoring force which the second tension spring (34) has built up in this position of the driver (46) is greater than the restoring force of the first tension spring (32) which the latter has in the second position of the gearwheel (26).

## Revendications

1. Véhicule utilitaire (2) avec une extension arrière (6) maintenue sur le châssis (4) du véhicule utilitaire (2), qui est mobile entre différentes positions dans la direction de l'étendue longitudinale (8) du véhicule utilitaire (2) au moyen d'un engrenage à crémaillère (30), une crémaillère (28) de l'engrenage à crémaillère (30) étant reliée à l'extension arrière (6) et une roue dentée (26) de l'engrenage à crémaillère (30) étant maintenue sur un arbre entraînable (14), relié au châssis (4), et un dispositif de verrouillage, lors de l'actionnement duquel l'extension arrière (6) est maintenue verrouillée dans au moins une position par rapport au châssis (4), **caractérisé en ce que** la roue dentée (26) est reliée à un dispositif de réglage (10) avec lequel la roue dentée (26) est mobile en va-et-vient entre une première position dans laquelle les dents de la roue dentée (26) sont en prise avec des dents de la crémaillère (28) et une deuxième position dans laquelle les dents de la roue dentée (26) ne sont pas en prise avec les dents de la crémaillère (28).

2. Véhicule utilitaire (2) selon la revendication 1, **caractérisé en ce que** le dispositif de réglage (10) est configuré sous la forme d'un moyen de réglage (12) avec lequel l'arbre entraînable (14), relié au châssis (4), avec la roue dentée (26) reliée à celui-ci, est mobile dans une direction axiale entre les première et deuxième positions.

3. Véhicule utilitaire (2) selon la revendication 2, **caractérisé en ce que** l'arbre entraînable (14) est maintenu de manière mobile dans la direction axiale et dans la direction de rotation dans au moins deux supports de palier (16) agencés à distance l'un de l'autre, reliés de manière fixe au châssis (4), une première bague de siège (18) est placée sur l'arbre entraînable (14), et entre l'un des supports de palier (16) et la première bague de siège (18) est agencé un premier ressort de tension (32) qui s'appuie à sa première extrémité sur le support de palier (16) et à sa deuxième extrémité sur la première bague de siège (18), le premier ressort de tension (32) poussant, dans un état comprimé, l'arbre entraînable (14) dans une direction dans laquelle la roue dentée (26) se trouve dans la deuxième position.

4. Véhicule utilitaire selon la revendication 3, **caractérisé en ce que** la première bague de siège (18) est fixée sur le côté extérieur de l'arbre entraînable (14).

5. Véhicule utilitaire (2) selon la revendication 4, **caractérisé en ce qu'**une deuxième bague de siège (20) est fixée sur le côté extérieur de l'arbre entraînable (14), par l'intermédiaire de laquelle l'arbre entraînable (14) s'appuie sur une première surface d'appui (22) supportée côté châssis.

6. Véhicule utilitaire (2) selon l'une quelconque des revendications précédentes, **caractérisé en ce que** l'arbre entraînable (14) est configuré sous forme d'arbre creux et l'arbre creux est traversé par une tige de verrouillage (24) qui, dans sa position rétractée, verrouille l'extension arrière (6) et, dans sa position déployée, libère l'extension arrière (6).

7. Véhicule utilitaire (2) selon la revendication 6, **caractérisé en ce que** sur le côté frontal de l'arbre entraînable (14), détourné de la roue dentée (26), est posée de manière solidaire en rotation une coulisse (36) qui présente un nombre d'évidements (38, 40), au moins un premier des évidements (38, 40) présentant une forme périphérique qui permet un passage d'une saillie (42) dépassant de la surface périphérique de la tige de verrouillage (24) lors d'un mouvement axial de la tige de verrouillage (24), et au moins un deuxième des évidements (38, 40) présentant une conformation (44) dans laquelle la saillie (42) est maintenue par complémentarité de forme en position fixe dans la coulisse (36) lors d'un appui sur la conformation (44), et, par l'intermédiaire de la saillie (42) maintenue dans la conformation (44), une force de poussée et/ou une force de rotation agissant sur la tige de verrouillage (24) pouvant être transmise à l'arbre entraînable (14) par l'intermédiaire de la conformation (44).

8. Véhicule utilitaire (2) selon la revendication 7, **caractérisé en ce que** sur la périphérie extérieure de la tige de verrouillage (24) est placé un entraîneur (46) qui, lors d'un mouvement de déploiement de la tige de verrouillage (24), vient en butée contre un disque d'entraînement (48) placé sur la tige de verrouillage (24) et mobile sur celle-ci dans la direction axiale, un deuxième ressort de tension (34) étant placé sur la tige de verrouillage (24) sur le côté du disque d'entraînement (48) détourné de l'entraîneur (46), lequel ressort s'appuie, dans une position de déploiement de la tige de verrouillage (24), à une première extrémité sur le disque d'entraînement (48) et à une deuxième extrémité sur une deuxième surface d'appui supportée côté cadre, la longueur du deuxième ressort de tension (34), la position de la deuxième surface d'appui (50) par rapport à la coulisse (36) et la position de l'entraîneur (46) sur la tige de verrouillage (24) étant choisies de telle sorte que le deuxième ressort de tension (34) est enfoncé par l'entraîneur (46) lorsque la saillie (42) est suffisamment déployée de l'arbre entraînable (14) dans la direction axiale, pour que la saillie (42) se trouve à l'extérieur de l'arbre entraînable (14), et que la force de rappel que le deuxième ressort de tension (34) a établie dans cette position de l'entraîneur (46) est plus grande que la force de rappel du premier ressort de tension (32) que celui-ci présente dans la deuxième position de la roue dentée (26).
